# FASCICULE DE BREVET EUROPEEN

(11) **EP 0 475 831 B1**
(45) Date de publication et mention de la délivrance du brevet: **01.03.1995**
(21) Numéro de dépôt: 91402397.3
(22) Date de dépôt: 09.09.1991
(51) Int. Cl.: C04B 14/30, G21F 1/04

(54) **Béton lourd anti-radiations, utilisable notamment dans la fabrication de conteneurs pour déchets radioactifs**
Strahlungsabschirmender Schwerbeton insbesondere verwendbar zur Herstellung von Behälter für radioaktiven Abfälle
Anti-radiation heavy concrete, particular for use in the manufacture of radioactive waste containers

(30) Priorité: 14.09.1990 FR 9011401
(43) Date de publication de la demande: 18.03.1992
(73) Titulaire: ELECTRICITE DE FRANCE Service National, 75008 Paris (FR)
(72) Inventeur: Credoz, Jean-Paul, 69370 St-Didier-au-Mont d'Or (FR); Mercier, Jean-Marc, F-38300 Bourgoin-Jallieu (FR)
(74) Mandataire: Polus, Camille

(56) Documents cités:
- EP-A- 0 264 521
- DE-A- 3 244 707
- FR-A- 2 529 873
- GB-A- 2 211 834
- US-A- 4 188 231
- CHEMICAL ABSTRACTS, vol. 103, 1985, page 483, résumé no. 61284n, Columbus,Ohio, US; & RO-A-83 242 (INSTITUTAL DE CERCETARI IN CONSTRUCTIISI ECONOMIA CONSTRUCTIILOR (INCERC)) 28-02-1984

## Description

La présente invention a pour objet un béton lourd anti-radiations, utilisable notamment dans la fabrication de conteneurs pour le transport et le stockage de déchets radioactifs.

Les déchets radioactifs produits par les centrales nucléaires sont transportés et stockés, éventuellement après transformation, dans des conteneurs qui doivent être en béton dès que le débit de dose (radioactivité mesurée) dépasse 200 mrem/h. Toutefois, les conteneurs en béton sont actuellement munis d'un ou plusieurs blindages en plomb, acier et éventuellement d'autres métaux, ce qui rend leur fabrication relativement complexe et onéreuse (cf. par exemple GB-A-2 132 814).

Par ailleurs on connaît des bétons lourds contenant des granulats de roches naturelles telles que le basalte, la galène, l'hématite, la magnétite, la barytine, etc, et qui sont destinés à la fabrication de sols industriels ou de barrières de protection contre les radiations, mais qui n'ont pas toutes les qualités nécessaires (notamment résistance mécanique et stabilité chimique) à la réalisation de conteneurs de produits radioactifs. Ainsi EP-A-0264521 décrit un béton lourd (densité supérieure à 3,5) à base d'hématite et de barytine, utilisable dans des conteneurs à parois en acier.

Le but de l'invention est la mise au point d'une composition de béton lourd permettant de diminuer ou de remplacer totalement le blindage métallique, notamment en plomb et acier, qui assure actuellement la majeure partie de la radioprotection des conteneurs en béton.

Le but est atteint conformément à l'invention par l'obtention d'un béton à base d'hématite très divisée, à l'exclusion de toute autre charge de densité inférieure; le béton a ainsi une densité élevée et de meilleures propriétés mécaniques.

L'invention a donc pour objet un béton lourd anti-radiations contenant, pour 1m³ de béton :
- 250 à 400 kg de ciment
- 120 à 140 kg d'eau
- 1000 à 1300 kg d'hématite 0/1 mm
- 900 à 1000 kg d'hématite 0/5 mm
- 1700 à 1800 kg d'hématite 8/25 mm,
et, le cas échéant, des adjuvants jusqu'à 2% en poids du ciment, la densité de ce béton étant supérieure à 4.

Le ciment utilisé dans cette composition peut être du type CPA ou CPJ, notamment des classes 45, 55 ou HP (ct. normes AFNOR NF P 15-301), mais d'autres ciments sont utilisables. Une proportion supérieure de ciment ne conduirait pas à une augmentation des résistances mécaniques du béton, mais impliquerait une augmentation du retrait, un abaissement de la densité du béton, le surdosage en eau et un surcoût inutile. On préfère utiliser environ 300 kg/m³ de ciment, avec notamment environ 130 kg/m³ d'eau.

Le(s) adjuvant(s) des bétons peuvent notamment être choisis parmi les plastifiants (par exemple Durciplast^{R}), les fluidifiants (par exemple Sika-fluid^{R}), les réducteurs d'eau, etc. Ces produits sont bien connus par l'homme de l'art.

L'hématite avec 3 granulométries différentes, notamment de 0/1mm, permet de fournir au béton selon l'invention sa caractéristique principale qui est la densité élevée, mais aussi la stabilité chimique, et la résistance mécanique; en effet il est autoportant lors de son démoulage.

Les exemples suivants illustrent l'invention.

### EXEMPLE 1 :

On a préparé un béton ayant la composition suivante (pour 1 m³) :

| | |
|---|---|
| - ciment CPA 55 | 300 kg |
| - eau | 130 kg |
| - hématite 0/1 | 1125 kg |
| - hématite 0/5 | 902 kg |
| - hématite 8/25 | 1734 kg |
| - plastifiant (Durciplast^{R}) | 5 kg |

La densité mesurée sur béton frais était 4,22 (densité théorique 4,20). Cette composition présente une plasticité suffisante, permettant une bonne mise en place dans le moule, pas de ségrégation pendant le moulage, et un démoulage immédiat. Les granulats utilisés sont suffisamment inertes chimiquement pour estimer une bonne stabilité dans le temps (radioprotection supérieure à 300 ans).

Caractéristiques mécaniques (à 7 jours) :

| | |
|---|---|
| - compression (norme NF P 18-406) | 42 MPa |
| - traction par fendage (NF P 18-408) | 5,78 MPa |

### EXEMPLE 2 :

On a préparé un béton ayant la composition suivante :

| | |
|---|---|
| - ciment CPA 55 | 300 kg |
| - eau | 130 kg |
| - hématite 0/1 | 1137 kg |
| - hématite 0/5 | 912 kg |
| - hématite 8/25 | 1712 kg |
| - plastifiant (Durciplast^{R}) | 5 kg |

et une densité de 4,2. Ce béton a les mêmes caractéristiques mécaniques que celui de l'exemple 1.

### EXEMPLE 3 :

On a préparé un béton ayant la composition suivante :

| | |
|---|---|
| - ciment CPA 55 | 280 kg |
| - eau | 125 kg |
| - hématite 0/1 | 1139 kg |
| - hématite 0/5 | 914 kg |
| - hématite 8/25 | 1762 kg |
| - plastifiant (Durciplast^{R}) | 5 kg |

Ce béton a une densité de 4,22 et les mêmes caractéristiques mécaniques que ceux des exemples précédents.

Le béton selon l'invention peut être utilisé pour la fabrication de conteneurs pour le transport et le stockage de déchets radioactifs, notamment comme enveloppe extérieure (coque) de conteneurs tels que par exemple celui décrit dans la demande de brevet français N° 88.05090 déposée le 18/04/88. Dans cet exemple, le volume utile du conteneur étant de 354 l, l'épaisseur du béton de coque extérieure (d = 4) 150 mm, et l'épaisseur du béton de blindage (d = 5,4) 110 mm, et l'activité du déchet enrobé étant de 9620 Gbq/m³ en Co60, le débit de dose est inférieur à 2 mSv/h (200 mrem/h) au contact du conteneur et inférieur à 0,1 mSv/h à 2 m de celui-ci.

Outre l'économie réalisable dans le prix du conteneur fabriqué à l'aide du béton selon l'invention, les avantages procurés par ce dernier viennent du fait que la radioprotection est intégrée dans le matériau même du conteneur, ce qui implique un gain de temps pour les manipulations et une garantie de la présence du blindage (la couleur rouge-brunâtre du béton selon l'invention étant un indicateur).

## Revendications

1. Béton lourd antiradiations contenant, pour 1m³ de béton :
- 250 à 400 kg de ciment
- 120 à 140 kg d'eau
- 1000 à 1300 kg d'hématite 0/1 mm
- 900 à 1000 kg d'hématite 0/5 mm
- 1700 à 1800 kg d'hématite 8/25 mm,
et, le cas échéant, des adjuvants jusqu'à 2% en poids du ciment, la densité de ce béton étant supérieure à 4.

2. Béton selon la revendication 1, caractérisé en ce que le ciment est du type CPA, ou CPJ des classes 45, 55 ou Hp.

3. Béton lourd antiradiations, caractérisé par la composition suivante (par m³) :
| | |
|---|---|
| - ciment CPA 55 | 300 kg |
| - eau | 130 kg |
| - hématite 0/1 | 1125 kg |
| - hématite 0/5 | 902 kg |
| - hématite 8/25 | 1734 kg |
| - plastifiant | 5 kg |
et par une densité de 4,2.

4. Béton lourd antiradiations, caractérisé par la composition suivante (par m³) :
| | |
|---|---|
| - ciment CPA 55 | 300 kg |
| - eau | 130 kg |
| - hématite 0/1 | 1137 kg |
| - hématite 0/5 | 912 kg |
| - hématite 8/25 | 1712 kg |
| - plastifiant | 5 kg |
et par une densité de 4,2.

5. Béton lourd antiradiations, caractérisé par la composition suivante (par m³) :
| | |
|---|---|
| - ciment CPA 55 | 280 kg |
| - eau | 125 kg |
| - hématite 0/1 | 1139 kg |
| - hématite 0/5 | 914 kg |
| - hématite 8/25 | 1762 kg |
| - plastifiant | 5 kg |
et par une densité de 4,22.

6. Conteneur pour le stockage de déchets radioactifs, caractérisé en ce qu'il comprend un béton selon l'une quelconque des revendications 1 à 5.

## Claims

1. Anti-radiation heavy concrete containing, for 1 m³ of concrete:
- 250 to 400 kg of cement
- 120 to 140 kg of water
- 1000 to 1300 kg of 0/1 mm hematite
- 900 to 1000 kg of 0/5 mm hematite
- 1700 to 1800 kg of 8/25 mm hematite,
and, where required, additives up to 2% of the weight of the cement, the density of this concrete being greater than 4.

2. Concrete according to Claim 1, characterised in that the cement is of the CPA type, or CPJ of class 45, 55 or HP.

3. Anti-radiation heavy concrete, characterised by the following composition (per m³):
| | |
|---|---|
| - CPA 55 cement: | 300 kg |
| - water: | 130 kg |
| - hematite 0/1: | 1125 kg |
| - hematite 0/5: | 902 kg |
| - hematite 8/25: | 1734 kg |
| - plasticizer: | 5 kg |
and by a density of 4.2.

4. Anti-radiation heavy concrete, characterised by the following composition (per m³):
| | |
|---|---|
| - CPA 55 cement: | 300 kg |
| - water: | 130 kg |
| - hematite 0/1: | 1137 kg |
| - hematite 0/5: | 912 kg |
| - hematite 8/25: | 1712 kg |
| - plasticizer: | 5 kg |
and by a density of 4.2.

5. Anti-radiation heavy concrete, characterised by the following composition (per m³):
| | |
|---|---|
| - CPA 55 cement: | 280 kg |
| - water: | 125 kg |
| - hematite 0/1: | 1139 kg |
| - hematite 0/5: | 914 kg |
| - hematite 8/25: | 1762 kg |
| - plasticizer: | 5 kg |
and by a density of 4.22.

6. Container for the storage of radioactive waste, characterised in that it comprises concrete according to any one of Claims 1 to 5.

## Patentansprüche

1. Strahlungsabschirmender Schwerbeton, der pro 1 m³ Beton enthält:
- 250 bis 400 kg Zement
- 120 bis 140 kg Wasser
- 1000 bis 1300 kg Hämatit 0/1 mm
- 900 bis 1000 kg Hämatit 0/5 mm
- 1700 bis 1800 kg Hämatit 8/25 mm,
und gegebenenfalls Zusatzstoffe bis zu 2 Gew.-% des Zements, wobei die Dichte dieses Betons über 4 liegt.

2. Beton nach Anspruch 1, dadurch gekennzeichnet, daß der Zement dem Typ CPA oder CPJ der Klassen 45, 55 oder HP angehört.

3. Strahlungsabschirmender Schwerbeton, gekennzeichnet durch die folgende Zusammensetzung (pro m³):
| | |
|---|---|
| - Zement CPA 55 | 300 kg |
| - Wasser | 130 kg |
| - Hämatit 0/1 mm | 1125 kg |
| - Hämatit 0/5 mm | 902 kg |
| - Hämatit 8/25 mm | 1734 kg |
| - Weichmacher | 5 kg |
und durch eine Dichte von 4,2.

4. Strahlungsabschirmender Schwerbeton, gekennzeichnet durch die folgende Zusammensetzung (pro m³):
| | |
|---|---|
| - Zement CPA 55 | 300 kg |
| - Wasser | 130 kg |
| - Hämatit 0/1 mm | 1137 kg |
| - Hämatit 0/5 mm | 912 kg |
| - Hämatit 8/25 mm | 1712 kg |
| - Weichmacher | 5 kg |
und durch eine Dichte von 4,2.

5. Strahlungsabschirmender Schwerbeton, gekennzeichnet durch die folgende Zusammensetzung (pro m³):
| | |
|---|---|
| - Zement CPA 55 | 280 kg |
| - Wasser | 125 kg |
| - Hämatit 0/1 mm | 1139 kg |
| - Hämatit 0/5 mm | 914 kg |
| - Hämatit 8/25 mm | 1762 kg |
| - Weichmacher | 5 kg |
und durch eine Dichte von 4,22.

6. Behälter für die Lagerung von radioaktiven Abfällen, dadurch gekennzeichnet, daß er einen Beton nach irgendeinem der Ansprüche 1 bis 5 umfaßt.
